# EUROPEAN PATENT SPECIFICATION

(11) **EP 4 041 689 B1**
(45) Date of publication and mention of the grant of the patent: **29.11.2023**
(21) Application number: 20789946.9
(22) Date of filing: 09.10.2020
(51) Int. Cl.: C02F 9/00, C02F 1/44, B01D 25/12, B01D 61/02, B01D 61/08, B01D 61/14, C02F 1/00, C02F 1/24, C02F 1/32, C02F 1/72, C02F 103/00

(54) **WASTEWATER TREATMENT APPARATUS**
ABWASSERBEHANDLUNGSVORRICHTUNG
APPAREIL DE TRAITEMENT DES EAUX USÉES

(30) Priority: 10.10.2019 IT 201900018404
(43) Date of publication of application: 17.08.2022
(73) Proprietor: De Nora Water Technologies Italy S.r.l., 20134 Milan (IT)
(72) Inventor: BETTINARDI, Alex, 20134 Milan (IT); KOESTER, Erik, 27612 Loxstedt (DE); HORN, Matthias, 65428 Ruesselsheim (DE)
(74) Representative: Reitstötter Kinzebach
(86) International application number: PCT/EP2020/078438
(87) International publication number: WO 2021/069677

(56) References cited:
- WO-A1-2006/104759
- WO-A1-2013/167358
- WO-A1-2015/193416
- WO-A2-2006/116533

## Description

### FIELD OF THE INVENTION

The invention relates to the field of wastewater treatment and, in particular, to an apparatus and a method for the treatment of wastewater.

### BACKGROUND OF THE INVENTION

The treatment of wastewater to improve effluent quality and recycle usable water is critical to the overall global effort of decreasing pollution and preserving precious water resources.

A variety of circumstances and applications may concur in the contamination of water with physical, chemical and biological pollutants. In general, wastewater encompasses: municipal wastewater from communities, also known as sewage, wastewater from industrial, commercial or agricultural activities, and domestic wastewater from households, office buildings or vessels. In the latter case, wastewater may include both black and/or grey water.

Black water indicates wastewater from toilets, while grey water comprises the remainder wastewater generated, for example, by streams without faecal contamination coming from kitchen and bathroom sinks, showers, baths, washing machines, dish washers and other cleaning appliances.

In general, the apparatus known in the art for treating wastewater typically make use of biological processes. These processes require continuous operation and trained personnel. Moreover, biological processes are not time efficient, since organic substances take time to be fully metabolized by biological micro-organisms through aerobic digestion.

It is noted that on vessels, if black and optionally grey waters are treated on board, this is usually done using biological processes.

WO2015193416 discloses a plant for the treatment of wastewater that does not require biological processes and is suitable for treating both black and grey waters on board of vessels. The plant comprises three main sequential water treatment units, respectively employing one or more band filters, one or more micro- or ultra-filtration filters, and an ozone treatment module.

However, the inventors have observed that the arrangement disclosed in the referenced prior art may cause biofouling of the ozone treatment module and/or of the membrane systems, which in practice requires the installation of large ozone treatment modules and further tertiary treatments, such as reverse osmosis membranes. This results in a reduced water flow-rate and longer treatment times.

WO 2006/104759 A1 describes a dual-train wastewater reclamation and treatment system for use on marine vessels or land-based application where wastewater is separated into two separate sources as grey water and black water, respectively. For black water, the treatment system incorporates five phases/zones: screening, clarifying, filtering, advanced oxidation and sludge reducing. For black water having a low total suspended solids (TSS) content, the black water filtration zone could be moved from its location prior to the black water advanced oxidation zone and after the clarification zone to after the black water-steered reaction zone (advanced oxidation zone).

WO 2006/116533 A2 describes a water treatment system for the removal of oil, grease, emulsions, chemicals, polymers, and suspended and dissolved solid contaminants from contaminated bore hole waters, also referred to as "oil-gas field-produced waters". The oil-gas field-produced waters are treated by a sequence of stabilization, emulsion oxidation, microparticle removal, adsorption, intense oxidation, and filtration steps.

In general, the treatment of wastewater, regardless of its source and location, must take into account cost, space and time constraints, as well as regulations concerning water quality prior to disposal. Therefore, an apparatus for the treatment of wastewater with a reduced footprint is desirable, in terms of reduced costs and environmental impact.

The above considerations are particularly relevant on board of vessels, where severe space limitations and stringent international requirements for water discharge apply.

Therefore, it would be desirable to provide an apparatus for the treatment of wastewater overcoming the limitations of the prior art, in particular an apparatus combining reduced footprint, costs and treatment times, with high water flow rate and effluent quality, suitable for direct disposal and/or reuse as potable or technical water.

Additionally, it would be desirable to provide an apparatus for direct treatment of black and grey water on board of vessels meeting the requirements of overboard discharge, and reducing the disposal of the biomass thus generated.

It would also be desirable to provide a wastewater treatment apparatus that does not require continuous operation and/or biological processes, and/or capable to outperform the apparatus known in the art whilst employing a reduced amount of chemicals.

### DETAILED DESCRIPTION OF THE INVENTION

Under one aspect, the present invention relates to an apparatus for the treatment of wastewater comprising the following elements: (i) a primary treatment module comprising at least one solids separation filter, (ii) a secondary treatment module comprising at least one microflotation unit and at least one oxidation treatment unit placed downstream of said at least one microflotation unit, (iii) a tertiary treatment module including at least one membrane filtration unit, and means for sequentially flowing wastewater from element (i) to element (ii), and then to element (iii). The at least one oxidation treatment unit comprises an advanced oxidation process module for performing chemical processes, said advanced oxidation process model performing an ozone and hypochlorite treatment. The inventors have surprisingly found that due to the two-step solid removal process of the present invention, namely using at least one solid separation filter in the primary treatment module followed by a microflotation unit in the secondary treatment module, a very effective advanced oxidation process can be carried out in the secondary treatment module following the second solid removal step in the microflotation unit.

In one embodiment, the ozone treatment and the hypochlorite treatment are carried out simultaneously in the advanced oxidation process module, for instance by concurrently injecting ozone and hypochlorite containing solutions into the wastewater stream. Preferably, however, the ozone treatment and the hypochlorite treatment are performed sequentially with the ozone treatment as a first step in the advanced oxidation process, immediately followed by the hypochlorite treatment. While ozone and hypochlorite are considered competing species when used simultaneously, it is assumed that in a sequential application of ozone and hypochlorite, ozone will be particularly effective reducing chemical oxygen demand (COD) while subsequent application of hypochlorite will be particularly effective reducing biological oxygen demand (BOD).

The advanced oxidation process unit may also ensure reduced reaction times.

Each primary, secondary and tertiary treatment module may be provided with at least one wastewater inlet and with at least one wastewater outlet for allowing wastewater to be fed in and out each module, respectively before and after the corresponding treatment step.

The modules are hydraulically connected with each other in direct or indirect sequence. It is therefore understood, here and in the following, that additional intermediate modules may be inserted between the primary, secondary and tertiary treatment modules without departing from the scope of the present invention whose extent is solely defined by the appended claims.

Optionally, any or all of the primary, secondary and tertiary treatment modules may comprise automated and self-cleaning filters and/or may be connected by means that suitable for continuous operation.

The wastewater to be treated may include industrial, agricultural, municipal, or domestic wastewater, such as, without limitation, municipal slurries, or gray and black waters produced on board of vessels, such as boats, ships, yachts, ferries, off-shore rigs or barges or other means of transportation by air, land or water.

During operation, the primary treatment module may be connected to a discharge of wastewater or to one or more wastewater collecting units connected with said discharge of wastewater.

For example, on board of vessels, the primary treatment module may be connected to two wastewater collecting units: a grey water collecting unit and a black water collecting unit respectively receiving the grey and black water produced on board. The grey water collecting unit may be a container connected with a discharge of grey water from the kitchen, the galley, the accommodation and/or the laundry. The black water collecting unit may be a container connected with a discharge of black water and of any other grey water not conveyed to the grey water collecting unit. Accordingly, in a preferred embodiment, black water and grey water are fed jointly into the primary treatment module and are treated simultaneously in the apparatus of the present invention. Regardless of their application, on land or on vessels, the one or more wastewater collecting units may be adapted to operate under suction and/or they may be connected to the primary treatment module by means suitable for continuously feeding the wastewater to the primary treatment module.

Optionally, an oil separator may be inserted downstream of the one or more wastewater collecting units and upstream of the primary treatment module, which may contribute to the removal of gasoline, diesel fuel, crude, vegetable and other types of oil present in the water.

When the wastewater is fed to the primary treatment module, the latter performs a primary solid separation. During this step, a partial removal of solid particulate matter present in the water to be treated, and free oil if an oil separator is present, is achieved by flowing the wastewater through one or more solid separation filters. Typically, a number of solid separation filters between 1 and 5 has been observed to work well in the execution of the invention.

By solid separation filter it is meant a mechanical or physical filter suitable for removing solids from liquid slurries.

The solid separation filter may be advantageously chosen among those known in the art capable to abate the amount of Total Suspended Solids (TSS) in the filtrate downstream, including both the Chemical Oxygen Demand (COD) and the Biochemical Oxygen Demand (BOD). Non limiting examples of solid separation filters that may be used to this effect are gravity filters, centrifuges, hydrocyclones, clarifiers, line filters, pressure filters, self-cleaning filters, screen filters, filter presses, disc filters, flotation system, screen press filters and/or band filters. In a preferred embodiment, the solid separation filters comprise a screw press. A screw press has small footprint making it a particularly preferred choice on board of vessels.

Solid separation filters that have been observed to work well in the execution of the invention are screen press and/or band filters. These filters may have the advantage of removing the amount of TSS after the primary treatment step to an extent equal to or greater than 50%.

These filters may also allow partial removal of free oils present in the wastewater. Downstream of the primary treatment step, wastewater is fed from the primary treatment module to the secondary treatment module. The secondary treatment module of the apparatus according to the invention comprises at least one microflotation unit upstream of at least one oxidation treatment unit.

The at least one microflotation unit comprises one or more microflotation systems, which further remove suspended matter like oil or solids from the filtrate.

In typical microflotation systems, air is dissolved in water under pressure, and subsequently released in the form of microbubbles, typically of 10-80 µm size, when the pressurized water is released in a float tank containing wastewater. The microbubbles, as they saturate the water, will adhere to the suspended matter and cause it to float to the surface where it may then be removed by any suitable technique, such as skimming.

Accordingly, in contrast to conventional dissolved air flotation units (DAF), where air bubbles are directly injected into the wastewater stream, in the apparatus of the present invention, the one or more microflotation systems of the at least one microflotation unit comprise a separate microbubble generator which consists of a pressurized water tank in which air is dissolved and the generated pressurized water/microbubble mixture is subsequently injected into a float tank containing wastewater obtained from the primary treatment unit.

A particular advantage of a microflotation system, especially as compared to conventional dissolved air flotation devices, consists in the possibility to generate a pressurized water/microbubble mixture having bubble sizes with a very narrow size distribution. Preferably, the microbubbles have a size from 30-70 µm. The microbubbles having a narrow size distribution means that at least 50 %, preferably at least 75 % and more preferably at least 80 % of the number of microbubbles generated is within the preferred size range.

The use of at least one microflotation unit in the secondary treatment module may provide an improved pre-filtration step, with the advantage of: (i) ensuring a consistent influent to the oxidation treatment unit(s), (ii) removing recirculated loads of solids and bacteria forming soluble organics, (iii) reducing chemical oxygen demand loads to the oxidation treatment unit(s) by more than 80% inlet versus outlet of the unit. This allows reducing contact time in the subsequent units, in particular in the oxidation treatment unit, and consequently reducing their size and the risk of fouling.

The microflotation unit, and its placement with respect to the other units, ensures a maintenance-free and cost-effective operation of the apparatus and allows a highly efficient separation of solids from liquids.

A number of microflotation units between 1-4 has been found to work well in the execution of the invention. The mircofloation units can be arranged in series. However, if more than one mircoflotation unit is employed, the mircoflotation units are preferably arranged in parallel.

The at least one oxidation treatment unit further removes residual organic and inorganic elements from the microflotation effluent via reactions with ozone and hypochlorite, and optionally hydroxyl radicals. The unit contributes to the degradation of long and short chain organic molecules and consequently avoids fouling of the membrane filtration unit situated downstream, in the tertiary treatment step.

Overall, the secondary treatment module comprising the microflotation and oxidation units may have the advantage of removing and amount of TSS module inlet versus module outlet to an extent equal to or greater than 90%.

According to an embodiment of the invention, in addition to the advanced oxidation processes (AOP), the oxidation treatment can make further use of ozone, hydrogen peroxide or hypochlorite or.

The above oxidation treatments may be carried out in combination with the advanced oxidation process. In some instances, hypochlorite may be generated via electrochemical means in an electrochlorinator module, or may be added as bulk hypochlorite. In particular, on board of vessels, sea water can be employed in an on-site electrochemical production of hypochlorite.

Among the other possible AOPs, the inventors have found that in addition to the ozone and hypochlorite treatment, the following further treatments, taken alone or in combination, work particularly well in the execution of the invention: ozone and hydrogen peroxide treatment, or a Fenton process treatment.

Other AOPs, such as processes including hydrogen peroxide and ultraviolet light (UV), ozonation and UV, Photo-Fenton, or photocatalytic oxidation (for instance with titanium oxide), have be found less effective, likely because of not optimal light absorption of UV light in wastewater at this treatment stage.

In the oxidation treatment unit, in the presence of an ozone treatment, ozone may be injected in multi-injection stages, for a more effective oxidation process.

A number of oxidation treatment units between 1-4 has been found to work particularly well in the execution of the invention.

The apparatus according to the invention may optionally comprise a sludge treatment unit connected to the secondary treatment module by means for delivering sludge.

The sludge treatment unit processes the residual, semi-solid by-product of the microflotation unit by reducing or drying out the water content of the biosolids present in the sludge. The sludge may be treated according to conventional techniques, such as thickening, dewatering or sludge drying. As a non-limiting example, the sludge treatment unit may include one or more filter presses, vacuum filters, belt presses, drying beds, centrifuges, gravity thickeners, direct dryers, indirect dryers and combined mode drying systems.

After treatment, dried sludge may be disposed of (for instance, buried underground in a sanitary landfill or incinerated) or reused in different applications, such as agricultural land applications (as fertilizer, soil conditioner, or soil substitute). Sludge treatment may advantageously reduce the volume of the secondary treatment byproducts up to 50%, and stabilize their organic content.

The effluent form the secondary treatment module is fed into the tertiary treatment module which comprises at least one membrane filtration unit.

A number of oxidation treatment units between 1-4 has been found to work particularly well in the execution of the invention.

The tertiary treatment step ensures waters extremely low in suspended solids, turbidity and effluent nutrients, as well as COD and BOD. In combination with the first and second treatment steps, the tertiary treatment provides for an improved throughput and capacity to treat the full design flow.

Membrane filtration may comprise, without limitation, microfiltration, ultrafiltration, nanofiltration and reverse osmosis, as well as their combinations.

According to one embodiment, the membrane filtration unit may comprise one or more ultrafiltration units. Each ultrafiltration unit may comprise an ultrafiltration membrane having a pore size of approximately 0.002 to 0.1 microns, a molecular weight cut off (MWCO) of approximately 10,000 to 100,000 daltons, and an operating pressure of approximately 200 to 700 kPa.

The ultrafiltration membrane may be made of any suitable material, such as polymers, ceramics, metals and their alloys, or composite materials such as silicon carbide.

The latter may advantageously provide improved BOD and faecal coliform removal. The tertiary treatment module may have the advantage of removing the amount of TSS with respect to the system influent to an extent equal to or greater than 95%.

Different module designs can be used for ultrafiltration process, such as tubular, hollow fibers, spiral wound, plate and frame designs.

Optionally, the tertiary treatment module may comprise at least one reverse osmosis filter or nanofiltration unit downstream of the ultrafiltration treatment.

Nanofiltration or reverse osmosis (RO) membranes are used for advanced wastewater post-treatment applications where a high quality permeate is necessary.

Optionally, the tertiary treatment module may further comprise at least one UV disinfection unit downstream of the at least one membrane filtration unit.

This UV disinfection step may be advantageously used to avoid biofouling before discharge: on vessels, for example, biofouling may occur along the route before overboard discharge.

Under a further embodiment, the apparatus according to the invention is characterised in that the total suspended solids removed from wastewater downstream of said microflotation unit inlet versus outlet is equal to or greater than 80%, preferably equal to or greater than 90%; and/or the total suspended solids removed from wastewater downstream of said secondary treatment module, inlet versus outlet, is equal to or greater than 90%, and is preferably equal to greater than 95%; and/or the total suspended solids removed from wastewater downstream of said tertiary treatment module is equal to or greater than 95% with respect of the entire system influent, and is preferably equal to greater than 98%.

In all embodiments hereinbefore described, the apparatus may optionally operate in continuous by using appropriate connecting means and feed pumps.

Under another aspect, the invention relates to a method for wastewater treatment to be performed in the apparatus hereinbefore described, and comprising treating wastewater by sequentially feeding it through the primary, the secondary and the tertiary treatment module via means for feeding wastewater.

Under one embodiment, the method is performed on a vessel and comprises the additional subsequent step of discharging overboard the treated wastewater, i.e. the effluent from the tertiary treatment module.

Under a further embodiment, the method according to the invention comprises the additional subsequent step of recycling at least part of the treated wastewater as technical water.

Under a further embodiment, the method according to the invention comprises the additional subsequent step of recycling at least part of the effluent from the tertiary treatment module as potable water, provided the tertiary treatment module comprises at least one reverse osmosis filter or nanofiltration unit downstream of the ultrafiltration unit.

Optionally, in the method according to any of the embodiments hereinbefore described, the wastewater may be sequentially fed to and from each said primary, secondary and tertiary treatment module in a continuous fashion.

The apparatus and method hereinbefore described provide the advantage of foregoing any biological treatment, which impacts on the cost and efficiency of the wastewater treatment apparatus, and avoids dealing with the disposal of biological sludge. Because of the type of units used, and their mutual positioning, the apparatus according to the invention exhibits a reduced footprint and very high effluent quality. For instance, when operated on board of vessels, the claimed apparatus allows to purify water for reuse in various purposes. Additionally, or alternatively, it allows to discharge outboard in compliance with international standards and local regulations. In particular, the apparatus according to the invention may be designed to meet the stringent discharge requirements of the Resolution of the Marine Environment Protection Committee (MEPC) 227(64) - 2016 (including 4.2), also known as the Helcom Standard, i.e. the International Maritime Organization standard for special area Baltic Sea and Alaska GP 2013 2015-2019.

Additionally, because of the specific choice and arrangement of units, the apparatus according to the invention ensures very high effluent quality and high flow rate over time, as it advantageously prevents biofouling of the units, which may thus operate in an efficient manner. This allows to reduce their number and/or size for any given inlet/outlet goal, with respect to the non-biological apparatus known in the art.

### BRIEF DESCRIPTION OF THE DRAWINGS

The invention may be understood by reference to the preceding description taken in conjunction with the accompanying figures.
Figure 1 schematically shows an apparatus for the treatment of wastewater, in accordance with a first embodiment of the present invention;
Figure 2 schematically shows an apparatus for the treatment of wastewater, in accordance with a second embodiment of the present invention;
Figure 3 schematically shows a preferred embodiment of the microflotation unit of the apparatus of Figure 2;
Figure 4 schematically shows a cross-sectional view of the float tank of Figure 3.

### DETAILED DESCRIPTION OF THE DRAWINGS

The figures shall be understood to be schematic illustrations of the invention: the number of parts showcased therein and/or their relative dimensions and proportions are not depicted true to life, but arranged and sized only for clarity and convenience purposes.

In the following figures, identical reference numerals denote parts performing the same or substantially the same function.

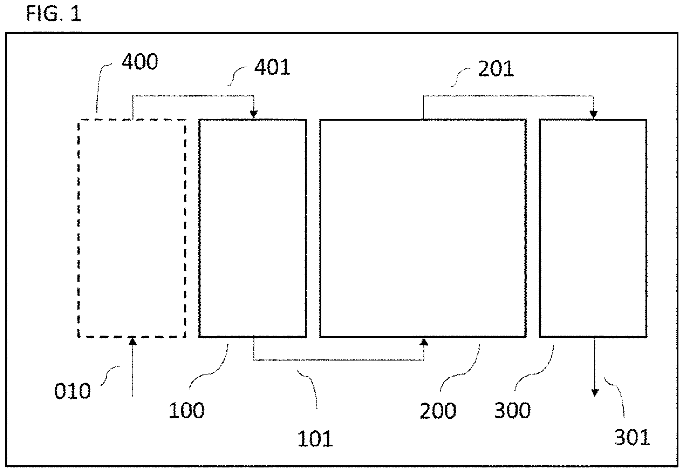

Figure 1 illustrates an apparatus for the treatment of wastewater comprising the following elements: a primary treatment module (100) that performs a primary solids separation, a secondary treatment module (200) that performs a further solids separation via microflotation and an oxidation treatment, and a tertiary treatment module (300) that performs a post-filtration treatment, also known as polishing. An optional wastewater collecting unit (400), connectable with a discharge of wastewater, is also shown. The optional unit (400) and the modules (100, 200, 300) are sequentially connected, respectively, by means (401, 101, 201). These may be conduits or piping suitable for sequentially flowing wastewater from one element to the next. The wastewater to be treated enters the apparatus via means (010) and is discharged after the tertiary treatment step via conduit (301).

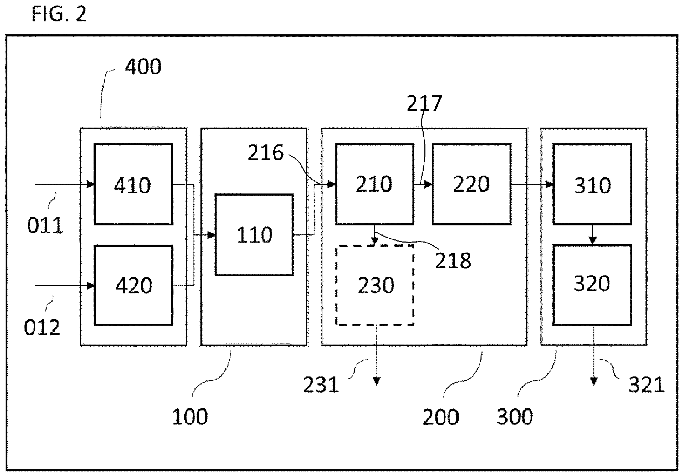

Figure 2 depicts an embodiment of the apparatus for the treatment of wastewater that may be advantageously used, for instance, on board of vessels. The wastewater collecting unit (400) consists of a grey water collecting unit (410) and a black water collecting unit (420) respectively connected with a discharge of grey water and a discharge of black water through means (011, 012).

Both collecting units (410, 420) are connected to the solids separation unit (110), containing one or more solids separation filters, of the primary treatment module (100). The solids separation unit (110) is connected to the microflotation unit (210), which in turn feeds the effluent to the oxidation treatment unit (220) of the secondary treatment module (200). The latter is connected to a membrane filtration unit (310) located upstream of a reverse osmosis filter (320), of the tertiary treatment module (300). After the tertiary treatment, the purified water may be discharged overboard via appropriate means (321) or reused as technical or potable water. The microflotation unit (210) may be further connected to an optional sludge treatment unit (230) to reduce the water content in the sludge, to facilitate its handling and disposal.

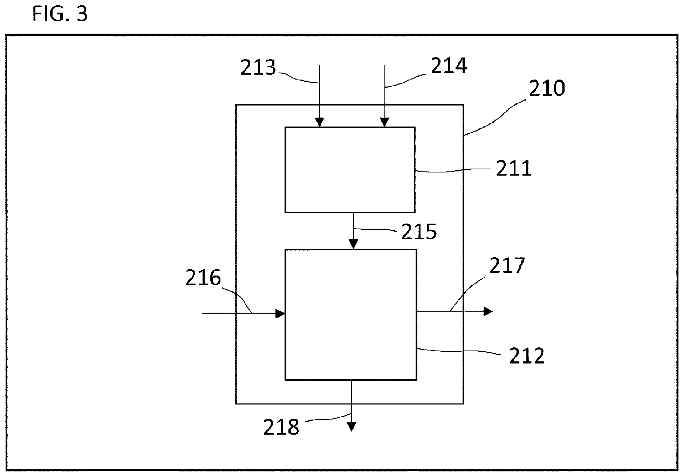

As shown schematically in Figure 3, the microflotation unit 210 comprises a microbubble generator 211 and a float tank 212. The microbubble generator 211 is a pressurized water tank receiving water via line 213. Air is injected into the microbubble generator 211 via one or more lines 214 which terminate in suitable nozzles within the microbubble generator 211 in order to generate a mixture of pressurized water and microbubbles where the microbubbles have sizes predominantly in the range of 10-80 µm, preferably in the range of 30-70 µm. The pressurized water/microbubble mixture is transferred to float tank 212 via line 215. Float tank 212 receives wastewater from the primary treatment unit 100 via line 216 and discharges the treated wastewater to the oxidation treatment unit 220 via line 217. The skimmed microbubbles with attached solids are transferred to the sludge treatment unit 230 via line 218.

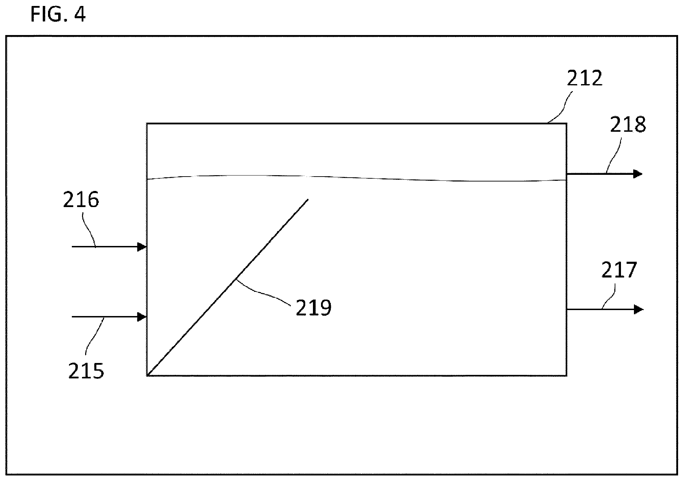

Figure 4 shows a schematical cross-sectional view of float tank 212. As can be taken from Figure 4, wastewater from the primary treatment unit enters the float tank via line 216 which is arranged above the entrance of the pressurized water/microbubble mixture which enters float tank 212 via line 215 from the microbubble generator 211 of Figure 3. A vertically slanted baffle 219 arranged within float tank 212 ensures an intimate mixture of incoming wastewater with the injected microbubbles. Microbubbles with adhering solids are skimmed from the water surface in the upper region of the float tank 212 and discarded via line 218 to the sludge treatment unit 230 of Figure 2. Treated wastewater is discarded via line 217 to the oxidation treatment unit 220 of Figure 2.

In the context of the present application, with the term "module" or "element" it is not necessarily meant a physical enclosure containing one or more units performing specific tasks for treating wastewater. The terms may also refer to a physical space where a unit, or an assembly of units of same or different kind, is located, and perform the tasks described in connection to that "module" or "element". The "module" or "element" may consist of the single unit or of a set of inter-connected units.

The following examples are included to demonstrate particular ways of reducing the invention to practice, whose practicability has been largely verified in the claimed range of values.

It should be appreciated by those of skill in the art that the equipment, compositions and techniques disclosed in the following represent equipment, compositions and techniques discovered by the inventor to function well in the practice of the invention; however, those of skill in the art should, in light of the present disclosure, appreciate that many changes can be made in the specific embodiments which are disclosed and still obtain a like or similar result without departing from the scope of the invention whose extent is solely defined by the appended claims.

### EXAMPLE

An apparatus for the treatment of wastewater was installed on a cruise ship for treating black and grey water in an amount of 1000 cubic meters per day.

The apparatus comprised a wastewater collecting unit receiving black water and grey water form a ships double bottom tanks and consisting of a black water container and grey water container. Each container was connected to the primary treatment module by feed pumps which fed the water to be treated to two solids separation filters of the screen press kind, with 250 microns mesh

The effluent from the solids separation presented a reduction of the amount of TSS of 50% and underwent the secondary treatment step. The effluent was fed to 4 microflotation units, each unit being able to treat 10 cubic meters per hour, and then to an oxidation treatment unit. The oxidation unit performed a multi injection of ozone and hypochlorite.

Form the oxidation unit, the effluent water was fed to the tertiary treatment: it was conveyed into an ultrafiltration unit comprising ceramic membranes and a nanofiltration unit.

The apparatus was operated for 4 months with a throughput flow rate of 40 cubic meters per hour.

No fouling of the ultrafiltration membrane was observed and the TSS removed from wastewater was measured to be > 99% downstream of the secondary and the tertiary treatment module, and 99% downstream of the tertiary treatment module.

The treated wastewater was analysed and the performance in regards to the presence of common contaminants is reported in TABLE 1.

**TABLE 1**

| | Influent [ppm] | Primary treatment effluent [ppm] | Secondary treatment effluent [ppm] | Tertiary treatment effluent [ppm] |
|---|---|---|---|---|
| | | [% reduction vs influent] | [% reduction vs influent] | [% reduction vs influent] |
| TSS | 830 | 269 | 5 | <5 |
| | | 67.5% | >99% | >99% |
| COD (horn.) | 1124 | 487 | 69 | 37 |
| | | 56.6% | 93.8% | >96% |
| BOD | 636 | 364 | 17 | 5 |
| | | 42.7 % | 97.3% | >99% |

The previous description shall not be intended as limiting the invention, which may be used according to different embodiments without departing from the scopes thereof, and whose extent is solely defined by the appended claims.

Throughout the description and claims of the present application, the term "comprise" and variations thereof such as "comprising" and "comprises" are not intended to exclude the presence of other elements, components or additional process steps.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention before the priority date of each claim of this application.

## Claims

1. An apparatus for the treatment of wastewater comprising the following elements:
(i) a primary treatment module (100) comprising at least one solids separation filter (110);
(ii) a secondary treatment module (200) comprising at least one microflotation unit (210) and at least one oxidation treatment unit (220) placed downstream of said at least one microflotation unit (210), wherein said at least one oxidation treatment unit (220) comprises an advanced oxidation process module for performing chemical processes, said advanced oxidation process module performing an ozone and hypochlorite treatment;
(iii) a tertiary treatment module (300) including at least one membrane filtration unit (310);
said apparatus being provided with means (101,201) for sequentially flowing wastewater from element (i) to (iii).

2. The apparatus according to claim 1 wherein said advanced oxidation process module performs said ozone treatment and said hypochlorite treatment sequentially.

3. The apparatus according to any one of claims 1 or 2 wherein said at least one microflotation unit comprises one or more microflotation systems including a microbubble generator (211) and a float tank (212) containing wastewater, said microbubble generator (211) being configured to inject a pressurized water/microbubble mixture into said float tank (212).

4. The apparatus according to any one of claims 1 to 3 wherein the at least one oxidation treatment unit (220) further comprises at least one additional ozone treatment module, a hydrogen peroxide treatment module or an electrochlorination module, taken alone or in combination.

5. The apparatus according to any one of claims 1 to 4 wherein said advanced oxidation process module further performs any of the following chemical processes, taken alone or in combination: a further ozone and hydrogen peroxide treatment, or a Fenton process treatment.

6. The apparatus according to any one of claims 1 to 5 wherein the at least one membrane filtration unit (310) comprises one or more ultrafiltration units.

7. The apparatus according to claim 6 wherein said tertiary treatment module (300) further comprises at least one reverse osmosis filter (320) or nanofiltration unit downstream of said one or more ultrafiltration units.

8. The apparatus according any one of claims 1 to 7 wherein said tertiary treatment module (300) further comprises at least one UV disinfection unit downstream of said membrane filtration unit(s) (310).

9. The apparatus according to any one of claims 1 to 8 further comprising a sludge treatment unit (230) connected to said secondary treatment module (200) by means for delivering sludge from said secondary treatment module into said sludge treatment unit.

10. The apparatus according to any one of the preceding claims further comprising
- at least one wastewater collecting unit (400) connectable with a discharge of wastewater and situated upstream of said primary treatment module (100);
- means (401) for flowing wastewater from said at least one wastewater collecting unit to said primary treatment module (100).

11. A method for wastewater treatment in an apparatus according to any one of claims 1 to 10 comprising sequentially treating wastewater through said primary treatment module (100), said secondary treatment module (200), and said tertiary treatment module (300).

12. The method according to claim 11 wherein the method is performed on a vessel and comprises the additional subsequent step of discharging overboard the treated wastewater downstream of said tertiary treatment module (300).

13. The method according to claim 11 comprising the additional subsequent step of recycling at least part of the treated wastewater downstream of said tertiary treatment module (300) as technical water.

14. The method according to claim 11 comprising the additional subsequent step of recycling at least part of the treated wastewater downstream of said tertiary treatment module (300) as potable water, where said tertiary treatment module (300) comprises at least one reverse osmosis filter (320) or nanofiltration unit downstream of said ultrafiltration unit.

15. The method according to claim 11 wherein wastewater is sequentially fed to and from each said primary (100), secondary (200) and tertiary treatment module (300) in a continuous fashion.

## Patentansprüche

1. Vorrichtung zur Behandlung von Abwasser, welche die folgenden Elemente umfasst:
(i) ein Primärbehandlungsmodul (100) mit mindestens einem Feststoffabscheidefilter (110);
(ii) ein Sekundärbehandlungsmodul (200), das mindestens eine Mikroflotationseinheit (210) und mindestens eine Oxidationsbehandlungseinheit (220) umfasst, die stromabwärts von der mindestens einen Mikroflotationseinheit (210) angeordnet ist, wobei die mindestens eine Oxidationsbehandlungseinheit (220) ein fortgeschrittenes Oxidationsprozessmodul zur Durchführung chemischer Prozesse umfasst, wobei das fortgeschrittene Oxidationsprozessmodul eine Ozon- und Hypochloritbehandlung durchführt;
(iii) ein Tertiärbehandlungsmodul (300) mit mindestens einer Membranfiltrationseinheit (310);
wobei die Vorrichtung mit Mitteln (101, 201) versehen ist, um das Abwasser nacheinander von Element (i) bis (iii) fließen zu lassen.

2. Vorrichtung gemäß Anspruch 1, wobei das fortgeschrittenen Oxidationsprozessmodul die Ozonbehandlung und die Hypochloritbehandlung nacheinander durchführt.

3. Vorrichtung gemäß einem der Ansprüche 1 oder 2, wobei die mindestens eine Mikroflotationseinheit ein oder mehrere Mikroflotationssysteme umfasst, die einen Mikroblasengenerator (211) und einen Schwimmtank (212), der Abwasser enthält, umfassen, wobei der Mikroblasengenerator (211) so konfiguriert ist, dass er ein unter Druck stehendes Wasser/Mikroblasen-Gemisch in den Schwimmtank (212) injiziert.

4. Vorrichtung gemäß einem der Ansprüche 1 bis 3, wobei die mindestens eine Oxidationsbehandlungseinheit (220) außerdem, einzeln oder in Kombination, mindestens ein zusätzliches Ozonbehandlungsmodul, ein Wasserstoffperoxidbehandlungsmodul oder ein Elektrochlorierungsmodul umfasst.

5. Vorrichtung gemäß einem der Ansprüche 1 bis 4, wobei das fortgeschrittene Oxidationsprozessmodul außerdem, allein oder in Kombination, einen der folgenden chemischen Prozesse durchführt: eine weitere Behandlung mit Ozon und Wasserstoffperoxid oder eine Behandlung nach dem Fenton-Prozess.

6. Vorrichtung gemäß einem der Ansprüche 1 bis 5, wobei die mindestens eine Membranfiltrationseinheit (310) eine oder mehrere Ultrafiltrationseinheiten umfasst.

7. Vorrichtung gemäß Anspruch 6, wobei das Tertiärbehandlungsmodul (300) außerdem mindestens einen Umkehrosmosefilter (320) oder eine Nanofiltrationseinheit stromabwärts der einen oder mehreren Ultrafiltrationseinheiten umfasst.

8. Vorrichtung gemäß einem der Ansprüche 1 bis 7, wobei das Tertiärbehandlungsmodul (300) außerdem mindestens eine UV-Desinfektionseinheit stromabwärts von der/den Membranfiltrationseinheit(en) (310) umfasst.

9. Vorrichtung gemäß einem der Ansprüche 1 bis 8, welche außerdem eine Schlammbehandlungseinheit (230) umfasst, die mit dem Sekundärbehandlungsmodul (200) durch Mittel zur Zuführung von Schlamm aus dem Nachbehandlungsmodul in die Schlammbehandlungseinheit verbunden ist.

10. Vorrichtung gemäß einem der vorherigen Ansprüche, welche außerdem umfasst:
- mindestens eine Abwassersammeleinheit (400), die mit einem Abwasserabfluss verbunden werden kann und sich stromaufwärts des Primärbehandlungsmoduls (100) befindet;
- Mittel (401), um Abwasser von der mindestens einen Abwassersammeleinheit zu dem Primärbehandlungsmodul (100) zu leiten.

11. Verfahren zur Abwasserbehandlung in einer Vorrichtung gemäß einem der Ansprüche 1 bis 10, bei dem Abwasser nacheinander durch das Primärbehandlungsmodul (100), das Sekundärbehandlungsmodul (200) und das Tertiärbehandlungsmodul (300) behandelt wird.

12. Verfahren gemäß Anspruch 11, wobei das Verfahren auf einem Schiff durchgeführt wird und den zusätzlichen nachfolgenden Schritt umfasst, das behandelte Abwasser stromabwärts des Tertiärbehandlungsmoduls (300) von Bord zu leiten.

13. Verfahren gemäß Anspruch 11, das den zusätzlichen nachfolgenden Schritt der Wiederverwendung zumindest eines Teils des behandelten Abwassers stromabwärts des Tertiärbehandlungsmoduls (300) als technisches Wasser umfasst.

14. Verfahren gemäß Anspruch 11, das den zusätzlichen nachfolgenden Schritt der Wiederverwendung zumindest eines Teils des behandelten Abwassers stromabwärts des Tertiärbehandlungsmoduls (300) als Trinkwasser umfasst, wobei das Tertiärbehandlungsmodul (300) mindestens einen Umkehrosmosefilter (320) oder eine Nanofiltrationseinheit stromabwärts der Ultrafiltrationseinheit umfasst.

15. Verfahren gemäß Anspruch 11, bei dem das Abwasser nacheinander jedem der Primär- (100), Sekundär- (200) und Tertiärbehandlungsmodule (300) in kontinuierlicher Weise zu- und abgeführt wird.

## Revendications

1. Appareil destiné au traitement des eaux usées, comprenant les éléments suivants :
(i) un module de traitement primaire (100) comprenant au moins un filtre de séparation des matières solides (110) ;
(ii) un module de traitement secondaire (200) comprenant au moins une unité de microflottation (210) et au moins une unité de traitement par oxydation (220) placée en aval de ladite au moins une unité de microflottation (210), dans lequel ladite au moins une unité de traitement par oxydation (220) comprend un module de processus d'oxydation avancée pour la réalisation des processus chimiques, ledit module de processus d'oxydation avancée effectuant un traitement à l'ozone et à l'hypochlorite ;
(iii) un module de traitement tertiaire (300) incluant au moins une unité de filtration sur membrane (310) ;
ledit appareil étant pourvu de dispositifs (101, 201) permettant l'écoulement séquentiel des eaux usées de l'élément (i) à l'élément (iii).

2. Appareil selon la revendication 1, dans lequel ledit module de processus d'oxydation avancée effectue séquentiellement ledit traitement à l'ozone et ledit traitement à l'hypochlorite.

3. Appareil selon l'une quelconque des revendications 1 et 2, dans lequel au moins une unité de microflottation comprend un ou plusieurs systèmes de microflottation comprenant un générateur de microbulles (211) et un réservoir flottant (212) contenant les eaux usées, ledit générateur de microbulles (211) étant configuré pour injecter un mélange d'eau sous pression/microbulles dans ledit réservoir flottant (212).

4. Appareil selon l'une quelconque des revendications 1 à 3, dans lequel ladite au moins une unité de traitement par oxydation (220) comprend en outre au moins un module de traitement à l'ozone supplémentaire, un module de traitement au peroxyde d'hydrogène ou un module d'électrochloration, pris seuls ou en combinaison.

5. Appareil selon l'une quelconque des revendications 1 à 4, dans lequel ledit module de processus d'oxydation avancée effectue en outre l'un des processus chimiques suivants, pris seuls ou en combinaison : un traitement supplémentaire à l'ozone et au peroxyde d'hydrogène, ou un traitement par le procédé Fenton.

6. Appareil selon l'une quelconque des revendications 1 à 5, dans lequel ladite au moins une unité de filtration sur membrane (310) comprend une ou plusieurs unités d'ultrafiltration.

7. Appareil selon la revendication 6, dans lequel ledit module de traitement tertiaire (300) comprend en outre au moins un filtre à osmose inverse (320) ou une unité de nanofiltration en aval de ladite ou desdites unité(s) d'ultrafiltration.

8. Appareil selon l'une quelconque des revendications 1 à 7, dans lequel ledit module de traitement tertiaire (300) comprend en outre au moins une unité de désinfection UV en aval de ladite ou desdites unité(s) de filtration sur membrane (310).

9. Appareil selon l'une quelconque des revendications 1 à 8, comprenant en outre une unité de traitement des boues (230), reliée audit module de traitement secondaire (200) par des moyens permettant d'acheminer les boues provenant dudit module de traitement secondaire jusqu'à ladite unité de traitement des boues.

10. Appareil selon l'une quelconque des revendications précédentes, comprenant en outre
- au moins une unité de collecte des eaux usées (400) pouvant être reliée à un rejet d'eaux usées et située en amont dudit module de traitement primaire (100) ;
- un moyen (401) permettant d'acheminer les eaux usées provenant de ladite au moins une unité de collecte des eaux usées jusqu'audit module de traitement primaire (100).

11. Procédé de traitement des eaux usées dans un appareil selon l'une quelconque des revendications 1 à 10, comprenant le traitement séquentiel des eaux usées à travers ledit module de traitement primaire (100), ledit module de traitement secondaire (200) et ledit module de traitement tertiaire (300).

12. Procédé selon la revendication 11, où ledit procédé est mis en oeuvre sur un navire et comprend l'étape ultérieure supplémentaire consistant à rejeter par-dessus bord les eaux usées traitées en aval dudit module de traitement tertiaire (300).

13. Procédé selon la revendication 11, comprenant l'étape ultérieure supplémentaire consistant à recycler au moins une partie des eaux usées traitées en aval dudit module de traitement tertiaire (300) en eau technique.

14. Procédé selon la revendication 11, comprenant l'étape ultérieure supplémentaire consistant à recycler au moins une partie des eaux usées traitées en aval dudit module de traitement tertiaire (300) en eau potable, où ledit module de traitement tertiaire (300) comprend au moins un filtre à osmose inverse (320) ou une unité de nanofiltration en aval de ladite unité d'ultrafiltration.

15. Procédé selon la revendication 11, dans lequel les eaux usées sont alimentées séquentiellement vers et depuis chacun desdits modules de traitement primaire (100), secondaire (200) et tertiaire (300) de manière continue.
